# FASCICULE DE BREVET EUROPEEN

(11) **EP 2 109 979 B1**
(45) Date de publication et mention de la délivrance du brevet: **31.10.2018**
(21) Numéro de dépôt: 07871958.0
(22) Date de dépôt: 18.12.2007
(51) Int. Cl.: H04L 29/06, H04L 12/741, H04L 12/935

(54) **PROCÉDÉ ET DISPOSITIF DE GESTION DE CONNEXIONS DANS UN RÉSEAU DE TÉLÉCOMMUNICATIONS**
VERFAHREN UND VORRICHTUNG ZUR VERBINDUNGSVERWALTUNG IN EINEM TELEKOMMUNIKATIONSNETZWERK
METHOD AND DEVICE FOR CONNECTION MANAGEMENT IN A TELECOMMUNICATION NETWORK

(30) Priorité: 29.12.2006 FR 0656041
(43) Date de publication de la demande: 21.10.2009
(73) Titulaire: Orange, 75015 Paris (FR)
(72) Inventeur: BROWN, Patrick, F-06800 Cagnes Sur Mer (FR)
(74) Mandataire: Cabinet Plasseraud
(86) Numéro de dépôt international: PCT/FR2007/052544
(87) Numéro de publication internationale: WO 2008/081146

(56) Documents cités:
- US-A1- 2003 002 494

## Description

La présente invention concerne la gestion des connexions d'un réseau de télécommunications.

Les connexions sont généralement répertoriées au niveau des noeuds du réseau, par exemple des équipements de routage de ce réseau. L'état de chaque connexion est susceptible d'être modifié au niveau d'un noeud du réseau lorsque celui-ci détecte un transit d'un paquet de données appartenant à cette connexion, c'est-à-dire qu'il émet ou reçoit un paquet de données.

On connaît, dans l'état de la technique, un procédé de gestion de connexions d'un réseau de télécommunications, dans lequel les connexions en cours sont répertoriées dans une liste. Le procédé comprend, pour chaque connexion, une étape de test pour déterminer si la connexion est terminée. Cette étape consiste en une comparaison de la durée écoulée depuis une date de détection d'un transit d'un paquet appartenant à cette connexion, avec une valeur de seuil. Si la durée est supérieure à la valeur de seuil, le procédé comprend une étape de suppression de la connexion de la liste.

Un tel procédé peut être configuré pour parcourir périodiquement la liste de toutes les connexions et appliquer l'étape de test à chaque connexion de la liste. Il peut également comprendre, dès qu'un transit de paquet est détecté, une étape de classement des connexions de la liste en fonction de leur ancienneté, c'est-à-dire, pour chaque connexion, la durée écoulée depuis la dernière date de détection d'un transit de paquet, et appliquer l'étape de test périodiquement uniquement à la connexion pour laquelle l'ancienneté est la plus grande.

Un tel procédé est satisfaisant lorsque le nombre de connexions à gérer est limité. Toutefois, dans le cas du parcours périodique de la liste, le temps de traitement de la liste croît linéairement avec le nombre de connexions de la liste, et, dans le cas du classement de la liste après chaque détection, le temps de traitement croît de façon logarithmique en fonction du nombre de connexions et de façon linéaire en fonction du nombre de paquets détectés.

Ce procédé présente donc rapidement des problèmes d'implémentation lorsqu'il est mis en oeuvre à grande échelle, notamment sur des réseaux dans lesquels le statut de milliers de connexions peut être modifié en une seconde. Pour que la gestion des connexions d'une liste de ce type de réseau soit effectuée en temps réel, il est en effet nécessaire que la fréquence de traitement d'une connexion de la liste soit très élevée, ce qui implique l'utilisation de moyens de calculs très puissants et donc coûteux.

L'état de la technique antérieure est représentée par le document US-2003/002494. Ce document décrit une méthode et système pour gérer une liste de connexions dans un réseau de télécommunication.

On propose, selon l'invention, un procédé de gestion de connexions pouvant être mis en oeuvre à grande échelle à un coût raisonnable.

Selon l'invention, on prévoit un procédé de gestion de connexions d'un réseau de télécommunications comprenant une étape de création d'au moins une liste, une connexion étant répertoriée dans une liste si un transit d'un paquet appartenant à cette connexion a été détecté à une date comprise dans un intervalle de temps de durée prédéterminée défini pour la liste considérée. Ainsi, les connexions répertoriées dans la ou chaque liste sont également associées à un intervalle de temps, qui se trouve déterminé lors de la création de liste. En choisissant alors les connexions à répertorier dans la liste selon un critère relatif à l'activité de ces connexions (par exemple selon une date de détection d'un transit d'un paquet appartenant à cette connexion), le procédé selon l'invention permet de classer les connexions dans différentes listes et de les associer à un intervalle de temps significatif pour la ou chaque connexion. On peut donc faire une analogie entre les listes créées par le procédé selon l'invention et des couches géologiques, chaque liste correspondant à une « époque » donnée. Les connexions correspondant à une même « époque » peuvent être considérées globalement et le traitement des connexions n'est alors plus individuel : les connexions répertoriées dans une même liste peuvent être traitées en traitant la liste, ce qui permet de gérer les connexions tout aussi efficacement que dans l'état de la technique, en mettant en oeuvre un nombre plus réduit d'opérations. Le procédé de gestion de connexions selon l'invention est donc apte à être mis en oeuvre dans des systèmes à plus grande échelle avec un même matériel et permet une gestion des connexions moins coûteuse.

Dans un premier mode de réalisation de l'invention, on met en oeuvre l'étape de création lorsqu'on détecte la fin d'un intervalle de temps associé à une liste créée antérieurement.

Ainsi, dans ce mode de réalisation, une nouvelle liste est automatiquement créée lorsque l'intervalle de temps associé à une liste existante est terminé. Toutes les dates possibles sont alors prises en compte une seule fois, ce qui permet de s'assurer de façon simple qu'aucune erreur n'est générée.

Dans un deuxième mode de réalisation, on met en oeuvre l'étape de création lorsqu'on détecte un transit d'un paquet d'une connexion à une date n'appartenant à aucun intervalle de temps associé à une ou des listes créées antérieurement.

La date de détection d'un transit d'un paquet est alors le critère pris en compte pour répertorier la connexion dans une liste donnée. Dans ce mode de réalisation, lorsqu'un paquet est détecté et ne peut être répertorié dans aucune liste existante, une liste est automatiquement créée. Cela permet d'éviter des opérations inutiles de création de liste, lorsque qu'aucun paquet ne transite par le réseau durant un intervalle de temps non négligeable. Le procédé est donc plus performant car il exécute moins d'opérations pour une toute aussi bonne gestion des connexions.

Avantageusement, le procédé comprend une étape d'ajout d'une connexion à la liste ou à celle des listes associée à un intervalle de temps dans lequel est comprise une date de détection d'un transit d'un paquet appartenant à la connexion.

De cette façon, il est très simple de gérer le classement des connexions dans les listes respectives.

La connexion pour laquelle un paquet a été détecté est appelée dans la suite connexion courante.

Optionnellement, le procédé comprend, lorsque la connexion courante est répertoriée dans une deuxième liste, différente de la liste à laquelle la connexion courante a été ajoutée, une étape de suppression de la connexion courante de la deuxième liste.

Une connexion donnée est dans ce cas répertoriée à tout instant dans une seule liste, même si la liste répertoriant la connexion courante change au cours du temps. Cela permet de réduire le volume de données à gérer.

Le procédé selon l'invention comprend de préférence une étape d'enregistrement d'une date associée à une connexion, la date associée correspondant à une date à laquelle un transit d'un paquet appartenant à la connexion concernée a été détecté.

En complément, le procédé selon l'invention peut également comprendre une étape de test pour déterminer si une durée écoulée entre une date associée à la connexion courante et une date de détection d'un paquet appartenant à la connexion courante est supérieure à une valeur de seuil. Le cas échéant, on met en oeuvre l'une au moins des étapes d'ajout et de suppression pour la connexion courante.

La valeur de seuil est de préférence choisie de telle sorte qu'une connexion répertoriée dans une liste depuis une durée juste inférieure à la valeur de seuil n'est pas susceptible d'être placée dans une liste « ancienne .> c'est-à-dire dans laquelle la connexion est susceptible d'être supprimée. Si deux transits de paquets sont détectés à des dates voisines, la connexion sera traitée seulement suite au premier transit. Lors du second transit, la connexion est considérée comme suffisamment récente pour que l'on ait pas à modifier son statut (elle est en particulier suffisamment récente pour ne pas être considérée comme terminée) et n'est donc pas traitée. Ainsi, dans ce cas, pour un même nombre de transits détectés, le procédé selon l'invention comporte un nombre d'opérations plus limité.

Dans un mode de réalisation particulier, suite à la détection d'un paquet, on met en oeuvre une étape de suppression d'au moins une connexion d'une liste créée antérieurement à un nombre prédéterminé de listes, à condition que la connexion supprimée soit différente de la connexion pour laquelle un paquet a été détecté.

Ainsi, lorsqu'une nouvelle connexion est ajoutée à l'une des listes, il est possible de supprimer une autre connexion, supposée terminée simplement par le fait qu'elle se trouve dans une liste ancienne, c'est-à-dire créée avant de nombreuses autres listes. La suppression des connexions terminées peut donc être lissée dans le temps, pour utiliser de façon contrôlée les ressources d'un noeud.

Optionnellement, l'étape de création est mise en oeuvre pour créer au moins deux listes, le procédé comprenant une étape de suppression d'une des listes, de préférence d'une liste créée antérieurement à un nombre prédéterminé de listes.

On peut donc effacer globalement les connexions, en supprimant la liste considérée comme ancienne ou comme la plus ancienne. De nombreux tests à effectuer régulièrement sur les connexions sont donc évités. En outre, dans des réseaux de télécommunications classiques, on sait que la plupart des connexions sont de durée très brève, voire se limitent à un transit de paquet. Ainsi, ce procédé de gestion permet de n'effectuer qu'une opération spécifique à ces connexions (l'étape de création) et donc de diminuer considérablement le nombre d'opérations prévues pour la gestion.

Dans un mode de réalisation particulier, on met en oeuvre les étapes de suppression et de création de façon concomitante.

Ainsi, on ne supprime une liste que si on a besoin de créer une autre liste, rendant la suppression de cette liste nécessaire, par exemple pour des raisons de volume de stockage. Cela permet également d'économiser la mise en oeuvre d'opérations et d'améliorer les performances de gestion notamment dans un réseau à grande échelle.

L'invention a également pour objet un dispositif de gestion de connexions d'un réseau de télécommunications, comprenant des moyens de création d'au moins une liste, une connexion étant répertoriée dans une liste si un transit d'un paquet appartenant à cette connexion a été détecté à une date comprise dans un intervalle de temps de durée prédéterminée défini pour la liste considérée. Les avantages énoncés pour le procédé selon l'invention sont transposables au dispositif selon l'invention.

On prévoit également selon l'invention un programme d'ordinateur pour la gestion de connexions d'un réseau de télécommunications, caractérisé en ce que le programme comprend des instructions logicielles pour créer une liste apte à répertorier au moins une connexion et associée à un intervalle de temps de durée prédéterminée.

On prévoit également selon l'invention un support d'informations comprenant une liste de gestion de connexions d'un réseau de télécommunications, la liste étant apte à répertorier au moins une connexion et associée à un intervalle de temps de durée prédéterminée.

On prévoit également selon l'invention un support de données caractérisé en ce qu'il contient un programme d'ordinateur selon l'invention.

L'invention sera mieux comprise à la lecture de la description qui va suivre, donnée uniquement à titre d'exemple et faite en se référant aux dessins dans lesquels :
- la figure 1 représente un réseau de télécommunication comprenant un dispositif de gestion de connexions selon l'invention ;
- la figure 2 représente les étapes successives d'un procédé de gestion de connexions selon un mode de réalisation de l'invention, mis en oeuvre par le dispositif de gestion de la figure 1 ;
- la figure 3 illustre un groupe d'étapes du procédé de gestion de connexions représenté à la figure 2.

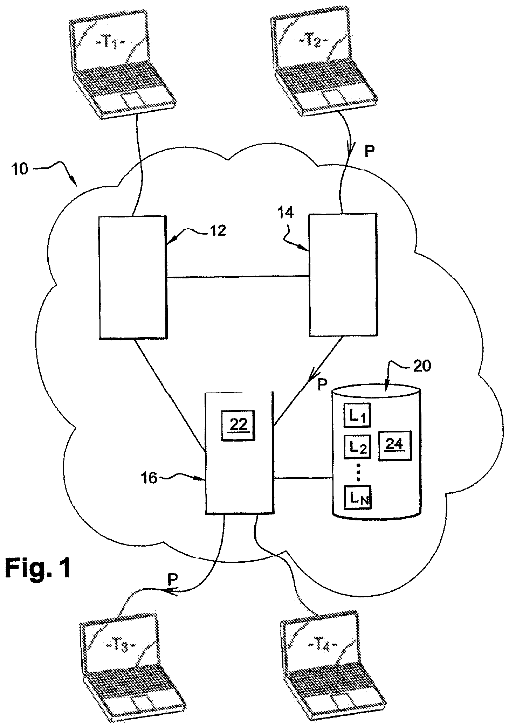

On a représenté sur la figure 1 un réseau de télécommunications 10, par exemple un réseau de type Internet, GPRS (acronyme anglais de Global Packet Radio Service), etc, comprenant quatre terminaux T₁, T₂, T₃ et T₄, ainsi que des équipements de routage 12, 14 et 16. Les équipements de routage forment des noeuds de ce réseau 10, par lesquels transitent des paquets (ici un transit d'un paquet P est représenté entre les terminaux T₂ et T₃, par l'intermédiaire des équipements 14 et 16).

Dans ce réseau, le noeud 16 comprend un dispositif de gestion de connexions. Ce dispositif 16 comprend des moyens de stockage de données 20, telle qu'une mémoire volatile du type EEPROM. Ces moyens de stockage comprennent N listes L₁, L₂, ..., L_{N}, de gestion de connexions aptes chacune à répertorier au moins une connexion (dont une connexion C₁ à laquelle appartient le paquet P transitant par le noeud 16) et également associées chacune à un intervalle de temps respectif D_{L1}, D_{L2},..., D_{LN} de durée prédéterminée. Ces moyens de stockage 20 stockent également un programme d'ordinateur 21 comprenant des instructions logicielles pour la gestion des connexions. Par « programme d'ordinateur » on peut entendre plusieurs modules se trouvant en interaction.

Une liste générale est enregistrée sur un support de données, sous forme par exemple d'un tableau, chaque ligne de ce tableau correspondant à une connexion. Le tableau comprend trois colonnes:
- une colonne servant à stocker un identifiant de chaque connexion de la liste générale,
- une autre colonne pour une date associée à chaque connexion de la liste, la date associée à une connexion correspondant à la date de détection d'un paquet appartenant à cette connexion,
- une troisième colonne donnant la liste à laquelle la connexion appartient.
Chaque liste Lᵢ est elle-même enregistrée sur un support de données, sous forme par exemple d'un tableau, chaque ligne de ce tableau correspondant à une connexion. Le tableau comprend deux colonnes:
- une colonne servant à stocker un identifiant de chaque connexion de la liste,
- une autre colonne servant à mémoriser une adresse mémoire ou une information permettant de retrouver une adresse mémoire, adresse à laquelle sont enregistrées des informations relatives à la connexion concernée.

L'information permettant de retrouver une adresse mémoire est par exemple un pointeur vers une zone mémoire ou un index relatif à un tableau stocké en mémoire. Tout autre information à partir de laquelle il est possible de retrouver la localisation en mémoire des informations relatives à la connexion est bien entendu utilisable. Dans la suite de la description, on se limitera au cas où c'est l'adresse mémoire qui est utilisée.

On mémorise en outre, en association avec chaque liste Lᵢ, une date de création de cette liste. La date de création d'une liste est choisie comme la date réelle à la laquelle la liste a été créée ou comme la date définissant le début de l'intervalle de temps D_{Li} associé à cette liste.

Le dispositif 16 comprend également des moyens de calcul 22, tels qu'un processeur, permettant l'exécution du programme d'ordinateur 21.

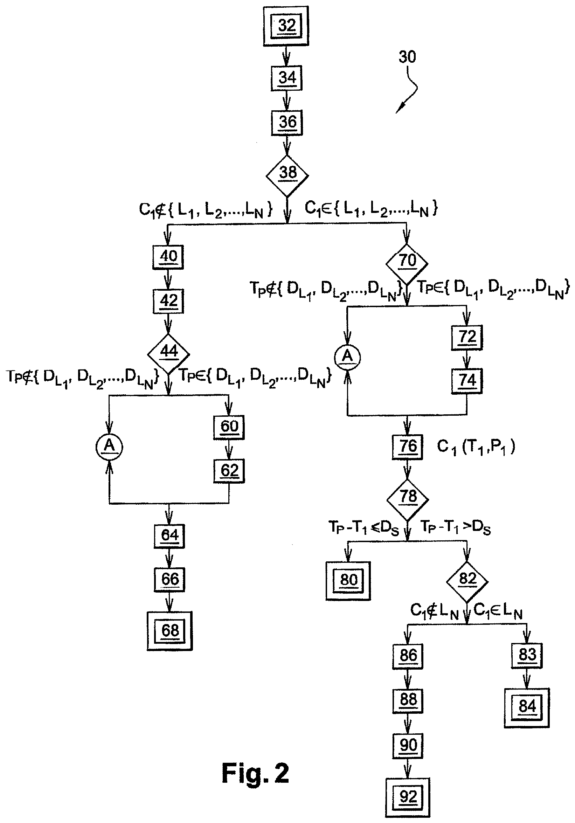

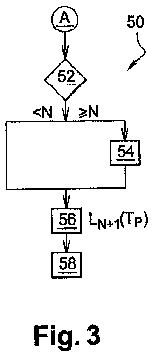

Nous allons maintenant décrire en référence aux figures 2 et 3 un procédé de gestion de connexions selon un mode de réalisation de l'invention, ce procédé étant par exemple mis en oeuvre par le dispositif 16.

Le procédé 30 de gestion de connexions représenté est exécuté de manière récursive, chaque nouvelle exécution de ce procédé 30 étant déclenchée par une étape 32 de détection d'un transit d'un paquet par le noeud 16 du réseau de télécommunications 10. Par « transit », on entend que le paquet P est émis ou reçu par le noeud 16. Dans le cadre de l'invention, la détection de paquets peut s'effectuer indifféremment au noeud 16 ou en tout point du réseau.

Une fois le paquet P détecté, le procédé comprend une étape 34 classique d'identification d'une connexion C₁ à laquelle appartient le paquet P. Cette étape est effectuée par le programme 21 de gestion de connexions, apte à déterminer un identifiant de connexion à l'aide d'informations ayant été préalablement extraites de l'en-tête du paquet P, par exemple un identifiant d'un terminal destinataire T₃ ou d'un terminal émetteur T₂ du paquet P. La connexion C₁ identifiée, pour laquelle un paquet a été détecté, est appelée dans la suite "connexion courante".

Le procédé comprend ensuite une étape 36 d'enregistrement de la date T_{P}, correspondant à la date de détection du transit du paquet P par le noeud 16.

Cette étape est suivie d'une étape 38 de test pour déterminer si la connexion est répertoriée dans l'une des listes L₁, L₂, ..., L_{N} existantes. Cette étape est effectuée par le programme 21 de gestion de connexions qui, au moyen de la liste générale, compare l'identifiant de la connexion C₁ avec l'identifiant de chaque connexion répertoriée dans une des listes L₁, L₂, ..., L_{N}.

Deux cas se présentent, selon que la connexion courante C₁ est ou n'est pas répertoriée dans une des listes L₁, L₂, ..., L_{N}.

### I. C₁ n'est pas répertoriée dans les différentes listes L₁, L₂, ..., L_{N.}

Dans ce cas, le programme crée, lors d'une étape 40, une ligne dans le tableau général destinée à répertorier la connexion C₁ et comprenant notamment l'identifiant de la connexion C₁. Le programme 21 enregistre également, lors de l'étape 42, la date de détection T_{P} du transit du paquet P en tant que date T₁ associée à la connexion C₁. Les étapes suivantes vont permettre de déterminer une liste d'appartenance de la connexion C1.

Le procédé comprend ensuite une étape 44 de test pour déterminer si la date associée à la connexion C₁, c'est-à-dire la date de détection T_{P}, est comprise dans un intervalle de temps D_{L1}, D_{L2}... D_{LN} associé à l'une des listes existantes L₁, L₂, ..., L_{N}.

### A. T_{P} n'est pas comprise dans un intervalle de temps D_{L1}, D_{L2}... D_{LN}.

Le procédé 30, illustré à la figure 2, comprend alors un sous-groupe d'étapes 50, comprenant les étapes 52 à 58, représenté à la figure 3.

Ce sous-groupe d'étapes comprend une première étape de test 52 pour déterminer si le nombre total de listes est supérieur ou égal à un nombre entier prédéterminé Nₘₐₓ.

### 1. Le nombre N de listes est supérieur ou égal à Nₘₐₓ.

Dans ce cas, le procédé comprend une étape 54 de suppression d'une liste créée antérieurement à un nombre prédéterminé Nₘₐₓ de listes. Pour effectuer cette étape, le programme 21 de gestion de connexions compare des dates de création de chacune des listes L₁, L₂, ..., L_{N}, enregistrées dans les moyens de stockage 20 du dispositif et détermine la ou les listes susceptibles d'être supprimées. Il choisit ensuite une liste de façon aléatoire, si plusieurs listes sont concernées, puis effectue la suppression de la liste choisie. Le programme peut par exemple être configuré pour que la liste supprimée soit la liste la plus ancienne (L₁). Suite à l'étape 54, on exécute l'étape 56 décrite ci-dessous.

### 2. Le nombre de listes est inférieur à Nₘₐₓ.

Dans ce cas, l'étape 56 est exécutée directement.

L'étape 56, effectuée également à la suite de l'étape 54 ou suite à l'étape 52, est une étape de création d'une nouvelle liste L_{N+1} enregistrée comme créée à la date T_{P}. Cette liste est associée à un intervalle de temps de durée prédéterminée, cet intervalle de temps débutant à la date de création de la liste T_{P}.

Le procédé comprend ensuite une étape 58 de classement des différentes listes en fonction de leur date de création, de façon à pouvoir identifier plus rapidement les listes les plus anciennes et, de ce fait, à faciliter l'étape de suppression de la liste.

### B. T_{P} est comprise dans un des intervalles de temps D_{L1}, D_{L2}... D_{LN}.

Lorsque, comme cela est représenté à la figure 2, on détermine, suite à l'étape 44, que la date de détection T_{P} du transit du paquet par le noeud 16 est comprise dans un des intervalles de temps D_{L1}, D_{L2}, ...D_{LN} associé à l'une des listes existantes L₁, L₂, ..., L_{N}, le procédé comprend une étape 60 de choix de connexions se trouvant répertoriées dans une des listes créées antérieurement à un nombre prédéterminé de listes, par exemple la liste L₁, qui est la plus ancienne des listes créées.

L'étape 60 est suivie d'une étape 62 de suppression des connexions choisies. Le choix des connexions dans la liste L₁ peut être effectué de façon aléatoire ou selon la date de cette connexion par le programme 21. Ces opérations 60, 62 sont effectuées pour permettre d'alléger une étape de suppression de la liste créée antérieurement à un nombre déterminé de listes, qui sera effectuée ultérieurement, car la suppression simultanée de toutes les connexions de la liste L₁ pourrait entraîner l'utilisation excessive des ressources du noeud 16.

Ainsi, dans le mode de réalisation représenté, la liste dans laquelle sont effacées les connexions et la liste supprimée en priorité (ici L₁) lorsque la fin des intervalles de temps associés aux listes est détectée, sont identiques.

Le procédé comprend, suite à l'étape 58 ou 62, une étape 64 d'ajout de la connexion C₁ à la liste associée à l'intervalle de temps dans lequel est comprise la date de détection T_{P}. Dans le cas où la liste a été créée suite à la détection du transit du paquet P (cas A), la connexion C₁ est ajoutée dans la liste nouvellement créée L_{N+1}. Dans le cas où la création d'une liste n'a pas été nécessaire (cas B), la connexion C₁ est enregistrée dans la dernière liste créée (L_{N}), qui est la seule liste pour laquelle la fin de l'intervalle de temps n'a pas été détectée.

Ce procédé est évidemment construit pour qu'une même date de détection ne soit pas comprise dans deux intervalles de temps distincts associés à deux listes différentes puisqu'une liste est créée uniquement lorsqu'une connexion ne peut pas être répertoriée dans les listes existantes. Il n'y a donc pas de chevauchement entre les intervalles associés aux différentes listes L₁, L₂, ..., L_{N}.

Lors de l'étape 64, l'adresse mémoire des données relatives à la connexion C₁ est retournée au programme 21 et celui-ci met à jour, lors d'une étape 66, l'adresse mémoire associée à la connexion C₁, de façon à pouvoir retrouver facilement des informations relatives à la connexion C₁ si un transit d'un nouveau paquet associé à cette connexion est détecté par le noeud 16..

Le procédé comprend ensuite une étape 68 d'attente, durant laquelle aucune opération n'est effectuée. La phase du procédé liée à la détection du paquet P est terminée mais le procédé reprend à l'étape 32 dès la détection d'un transit d'un nouveau paquet.

### II. C₁ est répertoriée dans une liste L₁, L₂, ..., L_{N}.

Le procédé comprend dans ce cas une étape de test 70 pour vérifier si la date T_{P} de détection du paquet est comprise dans l'un des intervalles de temps D_{L1}, D_{L2}... D_{LN} associés aux listes L₁, L₂, ..., L_{N}. Cette étape est analogue à l'étape 44.

### A. T_{P} n'est pas comprise dans un intervalle de temps D_{L1}, D_{L2}... D_{LN}.

Le programme 21 met alors en oeuvre le groupe d'étapes 50 (étapes 52 à 58 décrites ci-dessus).

### B. T_{P} est comprise dans un des intervalles de temps D_{L1}, D_{L2}... D_{LN}.

Si la date de détection T_{P} appartient à un intervalle de temps associé à l'une des listes L₁, L₂, ...L_{N} existantes, le procédé comprend des étapes 72, 74 de choix de connexions ne possédant pas le même identifiant de connexion que la connexion C₁ à laquelle appartient le paquet détecté P, et de suppression de ces connexions. Ces étapes 72, 74 sont analogues aux étapes 60, 62.

Le procédé comprend, suite à l'étape 58 ou 74, une étape 76 de lecture dans le tableau général de la date T₁ associée à la connexion C1 courante à laquelle appartient le paquet détecté et une adresse mémoire E₁ associée à la connexion C₁.

Le procédé comprend ensuite une étape de test 78 pour déterminer si une durée écoulée entre la date de détection T_{P} du paquet P et la date T₁ associée à la connexion C₁ est supérieure à une valeur de seuil D_{S}.

### 1er cas. T_{P}-T₁=< D_{S}.

Le procédé comprend dans ce cas une étape d'attente 80, analogue à l'étape 68 et la phase du procédé liée à la détection du transit du paquet P est terminée. Cette étape permet de ne pas effectuer plusieurs fois le traitement de paquets détectés à des dates voisines, sans toutefois courir le risque que la connexion associée à ces paquets soit supprimée, la durée de seuil D_{S} étant judicieusement choisie pour éviter que la connexion se trouve dans l'une des listes créées antérieurement à un nombre prédéterminé de listes L₁, L₂,...L_{N}. On limite ainsi le nombre de mises à jour à effectuer.

### 2ème cas. T_{P}-T₁> D_{S}.

Si la durée écoulée est au contraire supérieure à la valeur de seuil, le procédé comprend une étape 82 de test pour déterminer dans quelle liste L₁, L₂,...L_{N} se trouve répertoriée la connexion C₁ à la date de détection du paquet. Pour cela, le programme 21 interroge soit le tableau général, soit chacune des listes L₁, L₂,...L_{N} pour déterminer si elle contient une connexion associée à l'adresse mémoire E1.

### 1. C₁ appartient à la liste la plus récente.

Si, suite à cette étape, le programme 21 détermine que la connexion C₁ appartient à la liste créée le plus récemment et associée à un intervalle de temps dont la fin n'a pas été détectée (c'est-à-dire la liste L_{N} ou L_{N+1} selon le résultat de l'étape 70 de test), le procédé comprend une étape 83 de mise à jour de la date T₁ associée à la connexion C1, cette nouvelle date associée étant la date Tp de détection. L'étape 83 est suivie d'une étape 84 d'attente, identique aux étapes 68 et 80.

### 2. C₁ n'appartient pas à la liste la plus récente.

En revanche, si la connexion C₁ n'appartient pas à la liste L_{N} ou L_{N+1}, le procédé comprend une étape 86 de suppression de la connexion C₁ de la liste dans laquelle elle se trouve répertoriée. Cette étape est suivie d'une étape 88 d'ajout de la connexion C₁ dans la liste L_{N} créée le plus récemment, identique à l'étape 64. Le procédé comprend ensuite une étape 90 de mise à jour de la date T₁ associée à la connexion C1, cette nouvelle date associée étant la date Tp de détection et de mise à jour de l'adresse mémoire associée à la connexion, cette étape étant identique à l'étape 66 précédemment décrite. Cette étape est suivie d'une étape d'attente 92 identique aux étapes 68, 80 et 84.

Différentes variantes du procédé sont envisageables.

Selon une première variante, les étapes représentant la création d'une nouvelle liste L_{N+1} peuvent être exécutées de façon indépendante de la détection d'un paquet, notamment automatiquement lorsque le programme 21 détecte la fin de l'intervalle de temps associé à une autre liste L_{N}. Dans ce cas, les tests 44 et 70 ainsi que le groupe d'étapes 52 à 58 ou 60 à 62 ne sont plus mis en oeuvre lorsqu'un nouveau paquet est détecté. Dans cette variante, la date T_{P} de détection du paquet P appartient forcément à l'intervalle de temps d'une des listes, en l'occurrence, à l'intervalle de temps de la liste courante. Le groupe d'étapes 64 à 68 est ainsi exécuté suite à l'étape 44, lorsque la connexion C1 à laquelle appartient le paquet détecté, n'est pas répertoriée dans une liste existante. Le groupe d'étapes 76 à 92 est quant à lui exécuté suite à l'étape 70, lorsque la connexion C1 à laquelle appartient le paquet détecté est déjà répertoriée dans une liste existante.

En outre, l'étape de test 78 est une étape optionnelle, ainsi que l'étape de test 82, ces étapes permettant uniquement d'alléger encore le nombre de traitements à effectuer dans les différentes listes et n'étant en aucun cas nécessaire à l'exécution du procédé décrit précédemment.

Les étapes 60, 62, 72 et 74 sont également optionnelles, une liste pouvant être supprimée en une seule fois avec toutes les connexions qu'elle comporte.

Une autre variante consiste, lorsque la connexion à laquelle appartient un paquet est déjà répertoriée dans une des listes, à tester si la différence T_{P} - T₁ est inférieure à Ds, et dans l'affirmative, à n'effectuer aucun autre traitement ni mise à jour de liste. Cela a pour effet de limiter le nombre d'opérations de traitement à effectuer par unité de temps pour la mise en oeuvre du procédé selon l'invention.

Le procédé selon l'invention permet la gestion de connexions à grande échelle et à faible coût avec une puissance de calcul réduite car le nombre d'étapes de traitement de paquets et de connexions est limité.

Le procédé consiste à ne gérer et mettre à jour que les connexions actives, c'est-à-dire celles pour lesquelles des paquets sont détectés, les connexions inactives n'étant pas gérées et régulièrement supprimées par suppression d'anciennes listes ou d'anciennes connexions. Ainsi, seules les connexions de longue durée font l'objet d'un traitement consistant à maintenir à jour une information de date relative à ces connexions et/ou à modifier la liste d'appartenance de ces connexions. Le pourcentage de connexions de longue durée étant faible (5 à 10% en général), il en résulte une réduction du temps de traitement et des ressources nécessaires. Le processus permet donc un tri efficace des connexions en fonction de leur âge ou de leur durée.

## Revendications

1. Procédé (30) de gestion de connexions d'un réseau de télécommunications (10) au moyen d'une pluralité de listes (L₁, L₂, ..., L_{N}, L_{N}+₁), une connexion étant répertoriée dans une liste si un transit d'un paquet appartenant à cette connexion a été détecté à une date comprise dans un intervalle de temps (D_{L1}, D_{L2}, ..., D_{LN}, D_{LN+1}) de durée prédéterminée défini pour la liste considérée, le procédé comprenant une étape de création (56) d'au moins une dite liste (L₁, L₂, ..., L_{N}, L_{N+1}).

2. Procédé (30) selon la revendication 1, dans lequel on met en oeuvre l'étape de création (56) lorsqu'on détecte la fin d'un intervalle de temps (D_{L1}, D_{L2}, ..., D_{LN}, D_{LN+1}) associé à une liste (L₁, L₂, ..., L_{N}, L_{N+1}) créée antérieurement.

3. Procédé (30) selon la revendication 1, dans lequel on met en oeuvre l'étape de création (56) lorsqu'on détecte (32, 44, 70) un transit d'un paquet (P) d'une connexion (C₁) à une date (T_{P}) n'appartenant à aucun intervalle de temps (D_{L1}, D_{L2}, ..., D_{LN}, D_{LN+1}) associé à une liste ou à des listes (L₁, L₂, ..., L_{N}, L_{N+1}) créées antérieurement.

4. Procédé (30) selon l'une quelconque des revendications précédentes, comprenant une étape (64, 88) d'ajout d'une connexion (C₁), dite connexion courante, à une liste associée à un intervalle de temps (D_{LN}, D_{LN+1}) dans lequel est comprise une date (T_{P}) de détection d'un transit d'un paquet (P) appartenant à la connexion (C₁) courante.

5. Procédé (30) selon la revendication 4, comprenant, lorsque la connexion (C₁) courante est répertoriée dans une deuxième liste, différente de la liste à laquelle la connexion courante a été ajoutée, une étape de suppression (86) de la connexion courante de la deuxième liste.

6. Procédé (30) selon l'une quelconque des revendications précédentes, comprenant une étape d'enregistrement d'une date (T₁) associée à une connexion, la date associée correspondant à une date à laquelle un transit d'un paquet (P) appartenant à la connexion concernée a été détecté.

7. Procédé (30) selon la revendication 6, lorsqu'elle dépend de la revendication 4 ou 5, comprenant une étape (78) de test pour déterminer si une durée écoulée entre une date associée à la connexion courante et une date de détection (T_{P}) d'un paquet appartenant à la connexion courante est supérieure à une valeur de seuil (D_{S}), et le cas échéant, la mise en oeuvre de l'une au moins des étapes d'ajout (88) et de suppression (86).

8. Procédé (30) selon l'une quelconque des revendications précédentes, comprenant, suite à la détection d'un paquet (P), une étape de suppression (62, 74) d'au moins une connexion d'une liste (L₁, L₂, ..., L_{N}, L_{N+1}) créée antérieurement à un nombre prédéterminé (N-1) de listes, à condition que la connexion supprimée soit différente de la connexion (C₁) pour laquelle un paquet (P) a été détecté.

9. Procédé (30) selon l'une quelconque des revendications précédentes, dans lequel l'étape de création (56) est mise en oeuvre pour créer au moins deux listes, le procédé comprenant une étape (54) de suppression d'une des listes (L₁), de préférence d'une liste créée antérieurement à un nombre prédéterminé de listes.

10. Procédé (30) selon la revendication précédente, dans lequel on met en oeuvre les étapes de suppression (54) de liste et de création (56) de liste de façon concomitante.

11. Dispositif (16) de gestion de connexions d'un réseau de télécommunications, au moyen d'une pluralité de listes (L₁, L₂, ..., L_{N}, L_{N+1}), une connexion étant répertoriée dans une liste si un transit d'un paquet appartenant à cette connexion a été détecté à une date comprise dans un intervalle de temps (D_{L1}, D_{L2}, ..., D_{LN}, D_{LN+1}) de durée prédéterminée défini pour la liste considérée, le dispositif comprenant des moyens (20, 21, 22) de création d'au moins une dite liste (L₁, L₂, ..., L_{N}, L_{N+1}).

12. Programme d'ordinateur (21) pour la gestion de connexions d'un réseau de télécommunications, **caractérisé en ce que** le programme comprend des instructions logicielles pour créer une liste (L₁, L₂, ..., L_{N}, L_{N+1}) apte à répertorier au moins une connexion et associée à un intervalle de temps (D_{L1}, D_{L2}, ..., D_{LN}, D_{LN+1}) de durée prédéterminée.

13. Support d'informations comprenant une liste (L₁, L₂, ..., L_{N}, L_{N+1}) de gestion de connexions d'un réseau de télécommunications, la liste étant apte à répertorier au moins une connexion, et associée à un intervalle de temps (D_{L1}, D_{L2}, ..., D_{LN}, D_{LN+1}) de durée prédéterminée.

14. Support de données **caractérisé en ce qu'**il contient un programme d'ordinateur selon la revendication 12 .

## Patentansprüche

1. Verfahren (30) zur Verbindungsverwaltung eines Telekommunikationsnetzwerkes (10) mit Hilfe von mehreren Listen (L₁, L₂, ... , L_{N}, L_{N+1}) , wobei eine Verbindung in einer Liste aufgelistet wird, wenn ein Transit eines Pakets, das zu dieser Verbindung gehört, zu einem Zeitpunkt innerhalb eines Zeitintervalls (D_{L1}, D_{L2}, ..., D_{LN}, D_{LN+1}) von vorbestimmter Dauer erfasst worden ist, das für die betreffende Liste definiert wird, wobei das Verfahren einen Schritt des Erstellens (56) von mindestens einer Liste (L₁, L₂, ..., L_{N}, L_{N+1}) aufweist.

2. Verfahren (30) nach Anspruch 1, wobei der Schritt des Erstellens (56) umgesetzt wird, wenn das Ende eines Zeitintervalls (D_{L1}, D_{L2}, ..., D_{LN}, D_{LN+1}), das einer Liste (L₁, L₂, ..., L_{N}, L_{N+1}) zugeordnet wird, die zuvor erstellt worden ist, erfasst wird.

3. Verfahren (30) nach Anspruch 1, wobei der Schritt des Erstellens (56) umgesetzt wird, wenn ein Transit eines Pakets (P) einer Verbindung (C₁) zu einem Zeitpunkt (T_{P}) erfasst wird (32, 44, 70), der zu keinem Zeitintervall (D_{L1}, D_{L2}, ..., D_{LN}, D_{LN+1}), das einer Liste oder Listen (L₁, L₂, ..., L_{N}, L_{N+1}) zugeordnet wird, die zuvor erstellt worden sind, gehört.

4. Verfahren (30) nach einem der vorhergehenden Ansprüche, umfassend einen Schritt (64, 88) des Hinzufügens einer Verbindung (C₁), die aktuelle Verbindung genannt wird, zu einer Liste, die einem Zeitintervall (D_{LN}, D_{LN+1}) zugeordnet wird, in dem ein Zeitpunkt (T_{P}) des Erfassens eines Transits eines Pakets (P) enthalten ist, das zu der aktuellen Verbindung (C₁) gehört.

5. Verfahren (30) nach Anspruch 4, umfassend, wenn die aktuelle Verbindung (C₁) in einer zweiten Liste aufgelistet wird, die von der Liste verschieden ist, zu der die aktuelle Verbindung hinzugefügt worden ist, einen Schritt des Streichens (86) der aktuellen Verbindung von der zweiten Liste.

6. Verfahren (30) nach einem der vorhergehenden Ansprüche, umfassend einen Schritt des Aufzeichnens eines Zeitpunkts (T₁), der einer Verbindung zugeordnet wird, wobei der Zeitpunkt einem Zeitpunkt entspricht, zu dem ein Transit eines Pakets (P), das zu der betreffenden Verbindung gehört, erfasst worden ist.

7. Verfahren (30) nach Anspruch 6, wenn er von Anspruch 4 oder 5 abhängt, umfassend einen Schritt (78) des Überprüfens, um zu bestimmten, ob eine Dauer, die zwischen einem Zeitpunkt, der der aktuellen Verbindung zugeordnet wird, und einem Zeitpunkt des Erfassens (T_{P}) eines Pakets, das zu der aktuellen Verbindung gehört, verstrichen ist, größer als ein Schwellenwert (D_{S}) ist, und gegebenenfalls das Umsetzen von mindestens einem der Schritte des Hinzufügens (88) und des Streichens (86).

8. Verfahren (30) nach einem der vorhergehenden Ansprüche, umfassend nach dem Erfassen eines Pakets (P) einen Schritt des Streichens (62, 74) von mindestens einer Verbindung von einer Liste (L₁, L₂, ..., L_{N}, L_{N+1}), die vor einer vorbestimmten Anzahl (N-1) von Listen erstellt worden ist, vorausgesetzt, dass die gestrichene Verbindung von der Verbindung (C₁) verschieden ist, für die ein Paket (P) erfasst worden ist.

9. Verfahren (30) nach einem der vorhergehenden Ansprüche, wobei der Schritt des Erstellens (56) umgesetzt wird, um mindestens zwei Listen zu erstellen, wobei das Verfahren einen Schritt (54) des Streichens von einer der Listen (L₁), vorzugsweise von einer Liste, die vor einer vorbestimmten Anzahl von Listen erstellt worden ist, aufweist.

10. Verfahren (30) nach dem vorhergehenden Anspruch, wobei die Schritte des Streichens (54) von einer Liste und des Erstellens (56) von einer Liste gleichzeitig umgesetzt werden.

11. Vorrichtung (16) zur Verbindungsverwaltung eines Telekommunikationsnetzwerkes mit Hilfe von mehreren Listen (L₁, L₂,..., L_{N}, L_{N+1}), wobei eine Verbindung in einer Liste aufgelistet ist, wenn ein Transit eines Pakets, das zu dieser Verbindung gehört, zu einem Zeitpunkt innerhalb eines Zeitintervalls (D_{L1}, D_{L2}, ..., D_{LN}, D_{LN+1}) von vorbestimmter Dauer erfasst worden ist, das für die betreffende Liste definiert ist, wobei die Vorrichtung Mittel (20, 21, 22) zum Erstellen von mindestens einer Liste (L₁, L₂, ..., L_{N}, L_{N+1}) aufweist.

12. Computerprogramm (21) zur Verbindungsverwaltung eines Telekommunikationsnetzwerkes, **dadurch gekennzeichnet, dass** das Programm Softwareanweisungen aufweist, um eine Liste (L₁, L₂, ..., L_{N}, L_{N+1}) zu erstellen, die geeignet ist, mindestens eine Verbindung aufzulisten, und einem Zeitintervall (D_{L1}, D_{L2}, ..., D_{LN}, D_{LN+1}) von vorbestimmter Dauer zugeordnet ist.

13. Informationsträger, umfassend eine Liste (L₁, L₂, ... , L_{N}, L_{N+1}) zur Verbindungsverwaltung eines Telekommunikationsnetzwerkes, wobei die Liste geeignet ist, mindestens eine Verbindung aufzulisten, und einem Zeitintervall (D_{L1}, D_{L2}, ..., D_{LN}, D_{LN+1}) von vorbestimmter Dauer zugeordnet ist.

14. Datenträger, **dadurch gekennzeichnet, dass** er ein Computerprogramm nach Anspruch 12 enthält.

## Claims

1. Method (30) for managing connections of a telecommunications network (10) by means of a plurality of lists (L₁, L₂, ... , L_{N}, L_{N+1}), a connection being catalogued in a list if a transit of a packet belonging to this connection has been detected at a date lying in a time interval (D_{L1}, D_{L2}, ..., D_{LN}, D_{LN+1}) of predetermined duration, defined for the list considered, the method comprising a step (56) of creating at least one said list (L₁, L₂, ..., L_{N}, L_{N+1}).

2. Method (30) according to Claim 1, in which the creation step (56) is implemented when the end of a time interval (D_{L1}, D_{L2}, ..., D_{LN}, D_{LN+1}) associated with a list (L₁, L₂, ..., L_{N}, L_{N+1}) previously created is detected.

3. Method (30) according to Claim 1, in which the creation step (56) is implemented when a transit of a packet (P) of a connection (C₁) at a date (T_{P}) not belonging to any time interval (D_{L1}, D_{L2}, ..., D_{LN}, D_{LN+1}) associated with a list or with lists (L₁, L₂, ..., L_{N}, L_{N+1}) previously created is detected (32, 44, 70).

4. Method (30) according to any one of the preceding claims, comprising a step (64, 88) of adding a connection (C₁), termed a current connection, to a list associated with a time interval (D_{LN}, D_{LN+1}) in which there falls a date (T_{P}) of detection of a transit of a packet (P) belonging to the current connection (C₁).

5. Method (30) according to Claim 4, comprising, when the current connection (C₁) is catalogued in a second list, different from the list to which the current connection has been added, a step (86) of deleting the current connection from the second list.

6. Method (30) according to any one of the preceding claims, comprising a step of recording a date (T₁) associated with a connection, the associated date corresponding to a date at which a transit of a packet (P) belonging to the connection concerned has been detected.

7. Method (30) according to Claim 6, when it depends on Claim 4 or 5, comprising a test step (78) for determining whether an elapsed duration between a date associated with the current connection and a date (T_{P}) of detection of a packet belonging to the current connection is greater than a threshold value (Dₛ), and if appropriate, the implementation of one at least of the steps of addition (88) and deletion (86).

8. Method (30) according to any one of the preceding claims, comprising, following the detection of a packet (P), a step (62, 74) of deleting at least one connection of a list (L₁, L₂, ..., L_{N}, L_{N+1}) created prior to a predetermined number (N-1) of lists, on condition that the deleted connection is different from the connection (C₁) for which a packet (P) has been detected.

9. Method (30) according to any one of the preceding claims, in which the creation step (56) is implemented so as to create at least two lists, the method comprising a step (54) of deleting one of the lists (L1), preferably a list created prior to a predetermined number of lists.

10. Method (30) according to the preceding claim, in which the steps of list deletion (54) and of list creation (56) are implemented in a concomitant manner.

11. Device (16) for managing connections of a telecommunications network by means of a plurality of lists (L₁, L₂, ..., L_{N}, L_{N+1}), a connection being catalogued in a list if a transit of a packet belonging to this connection has been detected at a date lying in a time interval (D_{L1}, D_{L2}, ..., D_{LN}, D_{LN+1}) of predetermined duration, defined for the list considered, the device comprising means (20, 21, 22) of creating at least one said list (L₁, L₂, ..., L_{N}, L_{N+1}) .

12. Computer program (21) for managing connections of a telecommunications network, **characterized in that** the program comprises software instructions for creating a list (L₁, L₂, ..., L_{N}, L_{N+1}) able to catalogue at least one connection and associated with a time interval (D_{L1}, D_{L2}, ..., D_{LN}, D_{LN+1}) of predetermined duration.

13. Information medium comprising a list (L₁, L₂, ..., L_{N}, L_{N+1}) for managing connections of a telecommunications network, the list being able to catalogue at least one connection, and associated with a time interval (D_{L1}, D_{L2}, ..., D_{LN}, D_{LN+1}) of predetermined duration.

14. Data medium **characterized in that** it contains a computer program according to Claim 12.
